# EUROPEAN PATENT APPLICATION

(11) **EP 4 664 291 A1**
(43) Date of publication of application: **17.12.2025**
(21) Application number: 23923644.1
(22) Date of filing: 10.08.2023
(51) Int. Cl.: G06F 11/14

(54) **SYNCHRONOUS REMOTE REPLICATION METHOD AND APPARATUS FOR STORAGE SYSTEM**

(30) Priority: 24.02.2023 CN 202310196308
(71) Applicant: Huawei Technologies Co., Ltd., Shenzhen, Guangdong 518129 (CN)
(72) Inventor: ZENG, Qiang, Shenzhen, Guangdong 518129 (CN); WU, Xiuwei, Shenzhen, Guangdong 518129 (CN)
(74) Representative: Maiwald GmbH
(86) International application number: PCT/CN2023/112341
(87) International publication number: WO 2024/174477

(57) **Abstract**

A synchronous remote replication method and apparatus for a storage system are provided, to resolve a problem in the conventional technology that a delay from time at which a host delivers a write request to a primary storage device to time at which the host receives a write response from the primary storage device is long. The storage system includes the primary storage device and a remote storage device. The primary storage device includes a cache and a primary interface card. The method includes: The primary storage device obtains a write request from the host, where the write request includes target data; the primary storage device writes the target data into the primary interface card; the primary storage device writes the target data into the cache; the primary storage device sends a write success response to the host in response to successfully writing the target data into the cache; and the primary storage device sends the target data to the remote storage device in response to successfully writing the target data into the primary interface card.

## Description

### CROSS-REFERENCE TO RELATED APPLICATION

This application claims priority to Chinese Patent Application No. 202310196308.7, filed with the China National Intellectual Property Administration on February 24, 2023 and entitled "SYNCHRONOUS REMOTE REPLICATION METHOD AND APPARATUS FOR STORAGE SYSTEM", which is incorporated herein by reference in its entirety.

### TECHNICAL FIELD

This application relates to the field of computing technologies, and in particular, to a synchronous remote replication method and apparatus for a storage system.

### BACKGROUND

Remote replication is a core technology for disaster recovery and backup, and can implement remote data backup and disaster recovery. Specifically, the remote replication means that data is synchronized from a primary storage device to a remote storage device in real time or periodically, so that when the primary storage device is faulty, the remote storage device can provide a same function as the primary storage device.

In synchronous remote replication, a host delivers a write request to the primary storage device. The write request carries target data to be written into the primary storage device. The primary storage device not only needs to store the target data in a cache (denoted as a primary cache) of the primary storage device, but also remotely replicates the target data to a cache (denoted as a remote cache) of the remote storage device. After obtaining a result of storing the target data in the primary cache and a result of storing the target data in the remote cache, the primary storage device feeds back a write response corresponding to the write request to the host.

However, because a distance between the primary storage device and the remote storage device is long, synchronization duration needed to synchronize the target data from the primary storage device to the remote storage device is long. Correspondingly, a delay from time at which the host delivers the write request to the primary storage device to time at which the host receives the write response from the primary storage device is long, and the delay increases as the distance between the primary storage device and the remote storage device increases.

### SUMMARY

This application provides a synchronous remote replication method and apparatus for a storage system, to shorten a delay from time at which a host delivers a write request to a primary storage device to time at which the host receives a write response from the primary storage device during synchronous remote replication.

According to a first aspect, this application provides a synchronous remote replication method for a storage system. The storage system includes a primary storage device and a remote storage device. The primary storage device includes a cache and a primary interface card. The method includes: The primary storage device obtains a write request from a host, where the write request includes target data; the primary storage device writes the target data into the primary interface card; the primary storage device writes the target data into the cache; the primary storage device sends a write success response to the host in response to successfully writing the target data into the cache; and the primary storage device sends the target data to the remote storage device in response to successfully writing the target data into the primary interface card.

In the foregoing technical solution, after determining that the target data is successfully written into the cache, the primary storage device may return the write success response corresponding to the write request to the host without waiting for a result of writing the target data into the remote storage device. This helps shorten a synchronization delay of synchronous remote replication. Further, after determining that the target data is successfully written into the primary interface card, the primary storage device may send the target data to the remote storage device. In this way, the remote storage device may obtain the target data, to ensure data synchronization between the primary storage device and the remote storage device.

In a possible implementation, the primary storage device further includes a backup interface card. After successfully writing the target data into the primary interface card, the primary storage device further writes the target data into the backup interface card. Specifically, the primary interface card writes the target data into the backup interface card. This helps further improve data reliability in a disaster recovery and backup scenario.

In a possible implementation, the primary storage device further includes a primary storage array. The write request further includes an identifier of a target primary disk. After successfully writing the target data into the cache, the primary storage device further determines the target primary disk from the primary storage array based on the identifier of the target primary disk, and stores the target data in the cache in the target primary disk.

In a possible implementation, the primary storage device further determines an identifier of a target remote disk based on the identifier of the target primary disk and a preset mapping relationship between the target primary disk and the target remote disk, where the target remote disk is a disk in a remote storage array included in the remote storage device. The primary storage device writes the identifier of the target remote disk into the primary interface card. The primary storage device sends the identifier of the target remote disk to the remote storage device. Specifically, the primary interface card sends the identifier of the target remote disk to the remote storage device.

In the foregoing technical solution, the mapping relationship between the target primary disk and the target remote disk is preset. After obtaining the identifier of the target primary disk, the primary storage device may determine the identifier of the target remote disk based on the mapping relationship, and indicate the identifier of the target remote disk to the remote storage device by using the primary interface card. The remote storage device may store the target data in the target remote disk. In this way, when the primary storage device is faulty, the target remote disk that is configured to store the target data in the remote storage device may be determined, so that the target data is read from the target remote disk.

In a possible implementation, the primary storage device updates a health state of the mapping relationship that is between the target primary disk and the target remote disk and that is recorded in the primary storage device to abnormal in response to a failure of writing the target data into the primary interface card.

In the foregoing technical solution, it is considered that if the primary storage device sends a write failure response to the host, the host interrupts a currently running application service; and if the primary storage device updates the health state of the mapping relationship between the target primary disk and the target remote disk from normal to abnormal, the currently running application service on the host is not affected. In this way, when determining that the target data fails to be written into the primary interface card, the primary storage device may update the mapping relationship between the target primary disk and the target remote disk, so that interruption of the application service is avoided. This helps improve customer experience.

In a possible implementation, when detecting that a network between the primary storage device and the remote storage device is disconnected, the primary storage device may further record start time at which the network is disconnected. The primary storage device obtains a log request, and in response to the log request, outputs a log after the start time. The log after the start time is used to query data from the primary storage array of the primary storage device. In this way, differential data between the primary storage device and the remote storage device may be determined based on the start time at which the network is disconnected, and the differential data is updated in the remote storage device.

According to a second aspect, this application provides a synchronous remote replication apparatus for a storage system, including a primary management module, a cache, and a primary interface card. The primary management module is configured to: obtain a write request from a host, where the write request includes target data; write the target data into the primary interface card; write the target data into the cache; and send a write success response to the host in response to writing the target data into the cache. The primary interface card is configured to send the target data to a remote storage device.

In a possible implementation, the apparatus further includes a backup interface card. The primary interface card is further configured to write the target data into the backup interface card.

In a possible implementation, the apparatus further includes a primary storage array. The write request further includes an identifier of a target primary disk. After writing the target data into the cache, the primary management module is further configured to: determine the target primary disk from the primary storage array based on the identifier of the target primary disk, and store the target data in the cache in the target primary disk.

In a possible implementation, the primary management module is further configured to: determine an identifier of a target remote disk based on the identifier of the target primary disk and a preset mapping relationship between the target primary disk and the target remote disk, where the target remote disk is a disk in a remote storage array included in the remote storage device; and write the identifier of the target remote disk into the primary interface card. The primary interface card is further configured to send the identifier of the target remote disk to the remote storage device.

In a possible implementation, the primary management module is further configured to: update a health state of the mapping relationship that is between the target primary disk and the target remote disk and that is recorded in the primary management module to abnormal in response to a failure of writing the target data into the primary interface card.

In a possible implementation, the primary management module is further configured to: when detecting that a network between the apparatus and the remote storage device is disconnected, record start time at which the network is disconnected; and obtain a log request, and in response to the log request, output a log after the start time. The log after the start time is used to query data from the primary storage array of the apparatus.

According to a third aspect, this application provides a computer-readable storage medium. The computer-readable storage medium stores a computer program or instructions. When the computer program or the instructions are executed by a computing device, the computing device performs the method according to any one of the first aspect or the possible implementations of the first aspect.

According to a fourth aspect, this application provides a computing device, including a processor. The processor is connected to a memory. The memory is configured to store a computer program. The processor is configured to execute the computer program stored in the memory, to enable the computing device to perform the method according to any one of the first aspect or the possible implementations of the first aspect.

According to a fifth aspect, an embodiment of this application provides a computer program product. When a computer reads and executes the computer program product, the computer is enabled to perform the method according to any one of the first aspect or the possible implementations of the first aspect.

According to a sixth aspect, this application provides a storage system, including a primary storage device and a remote storage device. The primary storage device is configured to perform the method according to any one of the first aspect or the possible implementations of the first aspect.

For technical effects that can be achieved in any one of the second aspect to the sixth aspect, refer to descriptions of beneficial effects in the first aspect. Details are not described herein again.

### BRIEF DESCRIPTION OF DRAWINGS

FIG. 1 is a diagram of an architecture of a storage system;
FIG. 2 is a diagram of an architecture of a storage system applicable to a remote replication scenario;
FIG. 3 is a schematic flowchart of a synchronous remote replication method for a storage system;
FIG. 4 is a schematic flowchart of a synchronous remote replication method for a storage system according to this application;
FIG. 5 is a diagram of an architecture of another storage system applicable to a remote replication scenario; and
FIG. 6 is a diagram of a structure of a synchronous remote replication apparatus for a storage system according to this application.

### DESCRIPTION OF EMBODIMENTS

The following describes embodiments of this application in detail with reference to the accompanying drawings.

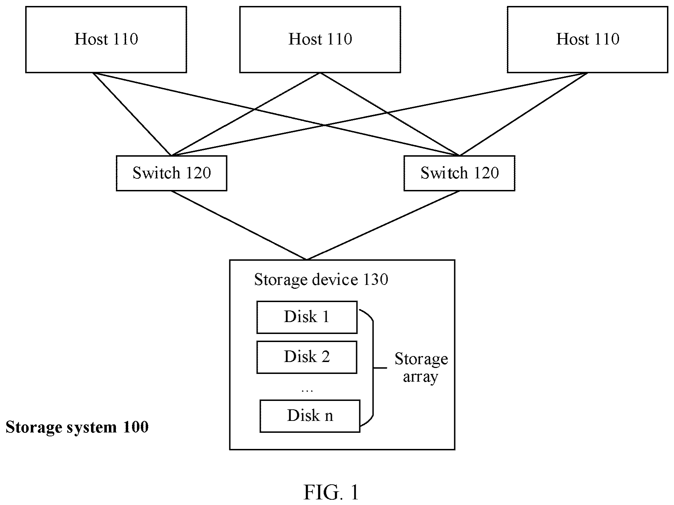

FIG. 1 is a diagram of an architecture of a storage system 100. In the storage system 100, a plurality of hosts 110 are connected to a storage device 130 via switches 120. An internet protocol (IP) storage network or a fibre channel (FC) storage network may be established between the hosts 110, the switches 120, and the storage device 130. A communication protocol between the hosts 110 and the switches 120 or between the switches 120 and the storage device 130 may be a small computer system interface (SCSI) protocol. Each host 110 may be connected to a client, so that a customer can operate or control the host 110 via the client.

In this embodiment, structures of the hosts are basically the same. In the following descriptions, one host 110 is used as an example for description. Various applications run on the host 110, and the applications are configured to provide different application services for the customer.

The storage device 130 includes a storage array, and the storage array stores data generated during running of the applications in the host 110. The storage array may be a flash memory array using a non-volatile memory express (non-volatile memory express, NVMe) interface, or may be a storage array using a SCSI. The storage array may be divided into at least one disk, for example, a disk 1 to a disk n in FIG. 1, where n is a positive integer. The storage array may communicate with the host 110 by using different interfaces, such as an NVMe interface and a SCSI interface. When the storage array is a flash memory array using an NVMe interface, the host 100 communicates with the storage array by using an NVMe protocol, and the disk may be represented by using a namespace (namespace) defined in the NVMe protocol. When the storage array is a storage array using a SCSI interface, the host 110 communicates with the storage array by using the SCSI protocol. The disk may be represented by using a logical unit number (logic unit number, LUN) defined in the SCSI protocol.

After disk division is completed, the storage array allocates one identifier (Identifier, ID) of a disk and one disk code to each disk. The identifier of the disk may uniquely identify the disk. For example, the identifier of the disk includes a world wide name (world wide name, WWN), vendor (vendor) information, and product (product) information that are used in the SCSI protocol, or the identifier of the disk includes a globally unique identifier (globally unique identifier, GUID), vendor information, and product information that are used in the NVMe protocol. The disk code is used to distinguish different disks in the storage array. For example, in the SCSI protocol, the LUN is numbered as LUN1, LUN2, ..., and in the NVMe protocol, the namespace is numbered as namespace1, namespace2, .... After the identifier of the disk and the disk code are allocated, the storage array configures a mapping relationship between the disk and the host, and specifically, configures a mapping relationship between the disk code and host port information (for example, host bus adapter (host bus adapter, HBA) card port information). A host to which the disk belongs may be determined based on the mapping relationship.

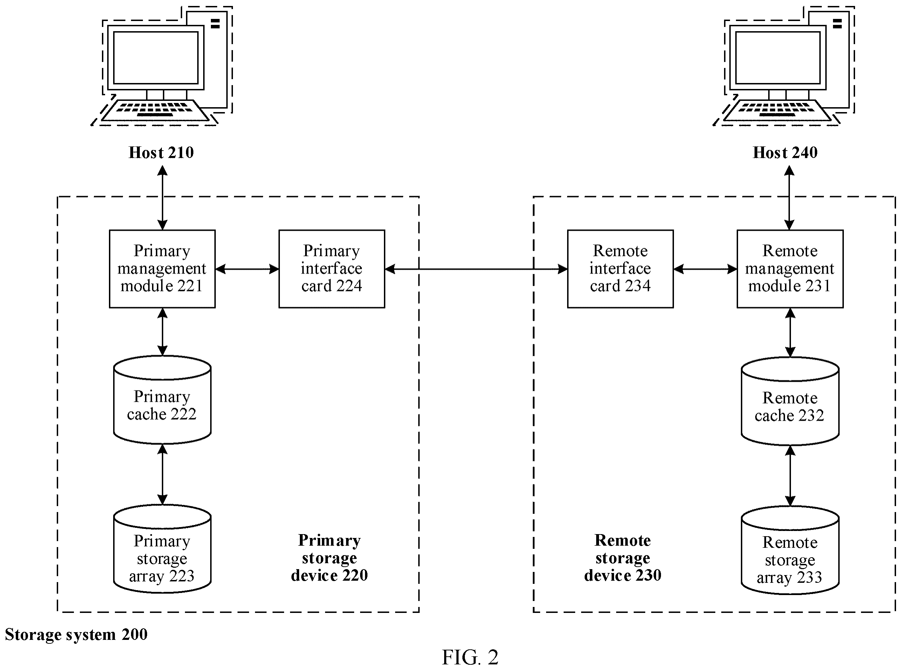

With reference to the storage system 100 shown in FIG. 1, FIG. 2 is a diagram of an example of an architecture of a storage system 200 applicable to a remote replication scenario according to this application. The storage system 200 includes two data centers, and each data center includes a host and a storage device. Specifically, the two data centers may be respectively denoted as a primary data center and a remote data center. The primary data center includes a host 210 and a primary storage device 220, and the remote data center includes a host 240 and a remote storage device 230. For example, the host 210 may be connected to the primary storage device 220 via a switch (not shown in FIG. 2), and the host 240 may be connected to the remote storage device 230 via a switch (not shown in FIG. 2).

When the host 210 and the primary storage device 220 run normally, the host 210 may write, into the primary storage device 220, data (denoted as target data) generated during running of an application in the host 210. Further, the primary storage device 220 may remotely replicate the target data to the remote storage device 230. When the host 210 or the primary storage device 220 is faulty, the host 240 may perform a function similar to that of the host 210. In addition, because the remote storage device 230 stores data that is the same as that of the primary storage device 220, the host 240 may continue to provide a same application service for a customer based on the remote storage device 230. This helps ensure normal running of the application service.

With reference to FIG. 2, the primary storage device 220 includes a primary management module 221, a primary cache (cache) 222, a primary storage array 223, and a primary interface card 224. The remote storage device 230 includes a remote management module 231, a remote cache 232, a remote storage array 233, and a remote interface card 234.

For example, the primary management module 221 is configured to: obtain the target data from the host 210, write the target data into the primary cache 222, and send the target data to the remote management module 231. The primary cache 222 is configured to write the target data into the primary storage array 223 (in other words, the primary cache 222 is configured to write the target data in the primary cache 222 into the primary storage array 223 under control of the primary management module 221, that is, the primary management module 221 is further configured to write the target data in the primary cache 222 into the primary storage array 223).

The remote management module 231 is configured to obtain the target data from the primary management module 221, and write the target data into the remote cache 232. The remote cache 232 is configured to write the target data into the remote storage array 233.

The primary interface card 224 and the remote interface card 234 implement communication between the primary storage device 220 and the remote storage device 230.

There are two remote replication methods: synchronous remote replication and asynchronous remote replication. The synchronous remote replication may implement real-time data synchronization to maximize data consistency and reduce a data loss when a disaster occurs. The asynchronous remote replication implements periodic data synchronization to minimize degradation of service performance caused by a delay of remote data transmission. In comparison with the asynchronous remote replication, the synchronous remote replication achieves better data security.

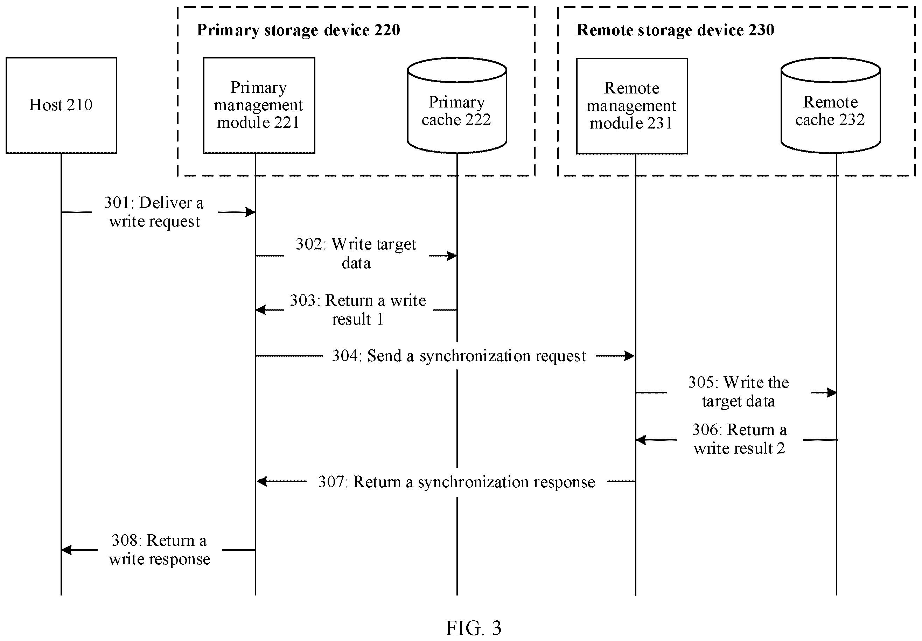

With reference to the diagram of the architecture of the storage system 200 shown in FIG. 2, FIG. 3 is a schematic flowchart of synchronous remote replication.

Step 301: The host 210 delivers a write request to the primary management module 221, where the write request includes target data to be written into the primary cache 222.

Step 302: The primary management module 221 writes the target data in the write request into the primary cache 222.

Step 303: The primary cache 222 returns a write result 1 to the primary management module 221.

Specifically, if the primary cache 222 determines that the target data is successfully cached, the write result 1 returned to the primary management module 221 is a write success, that is, the primary management module 221 successfully writes the target data into the primary cache 222. If the primary cache 222 determines that the target data fails to be cached, the write result 1 returned to the primary management module 221 is a write failure, that is, the primary management module 221 fails to write the target data into the primary cache 222.

Step 304: The primary management module 221 generates a synchronization request based on the target data in the write request, and sends the synchronization request to the remote management module 231. The synchronization request includes the target data.

For example, the primary management module 221 sends the synchronization request to the remote storage device 230 by using the primary interface card 224. Correspondingly, the remote management module 231 receives the synchronization request from the primary storage device 220 by using the remote interface card 234.

Step 305: The remote management module 231 writes the target data in the synchronization request into the remote cache 232.

Step 306: The remote cache 232 returns a write result 2 to the remote management module 231.

Specifically, if the remote cache 232 determines that the target data is successfully cached, the write result 2 returned to the remote management module 231 is a write success, that is, the remote management module 231 successfully writes the target data into the remote cache 232. If the remote cache 232 determines that the target data fails to be cached, the write result 2 returned to the remote management module 231 is a write failure, that is, the remote management module 231 fails to write the target data into the remote cache 232.

Step 307: The remote management module 231 sends a synchronization response to the primary management module 221.

Specifically, when the write result 2 is a write success, the synchronization response is also a write success (also referred to as a synchronization success response). When the write result 2 is a write failure, the synchronization response is also a write failure (also referred to as a synchronization failure response).

For example, the remote management module 231 sends the synchronization response to the primary management module 221 by using the remote interface card 234. Correspondingly, the primary management module 221 receives the synchronization response from the remote management module 231 by using the primary interface card 224.

Step 308: The primary management module 221 sends a write response to the host 210 based on the write result 1 and the synchronization response.

For example, if the primary management module 221 determines that both the write result 1 and the synchronization response are a write success, the write response sent to the host 210 is a write success (that is, a write success response); or if the primary management module 221 determines that the write result 1 and/or the synchronization response are/is a write failure, the write response sent to the host 210 is a write failure (that is, a write failure response).

In the foregoing synchronous remote replication procedure, the primary management module 221 returns the write response to the host 210 only after obtaining the write result 1 returned by the primary cache 222 and the synchronization response returned by the remote management module 231.

Generally, because both the primary management module 221 and the primary cache 222 are located in the primary storage device 220, when writing the target data into the primary cache 222, the primary management module 221 may receive, within a short delay (for example, hundreds of microseconds), the write result 1 returned by the primary cache 222. However, a distance between the primary management module 221 and the remote management module 231 is long, and transmission between the primary management module 221 and the remote management module 231 needs to be performed through a network. A delay from time at which the primary management module 221 sends the synchronization request to the remote management module 231 to time at which the primary management module 221 receives the synchronization response from the remote management module 231 is long. For example, when the distance between the primary management module 221 and the remote management module 231 is 100 km, the delay may be close to 1.3 ms; or when the distance between the primary management module 221 and the remote management module 231 is 3000 km, the delay may be close to 39 ms.

In this way, in synchronous remote replication, a delay (referred to as a synchronization delay below) from time at which the host 210 delivers a write request to the primary storage device 220 to time at which the host 210 receives a write response from the primary storage device 220 is closely related to the distance between the primary management module 221 (that is, the primary storage device 220) and the remote management module 231 (that is, the remote storage device 230). A longer distance between the primary storage device 220 and the remote storage device 230 indicates a longer synchronization delay.

However, to improve a disaster recovery capability (for example, when a natural disaster (for example, an earthquake) occurs at a location of the primary storage device 220, a location of the remote storage device 230 should not be affected), the primary storage device 220 and the remote storage device 230 usually need to be deployed at two locations away from each other. For example, the distance between the primary storage device 220 and the remote storage device 230 is greater than 3000 km. To further shorten the synchronization delay on the premise that the primary storage device 220 and the remote storage device 230 are deployed at two locations away from each other, this application provides a synchronous remote replication method.

The synchronous remote replication method is applicable to the storage system 200 shown in FIG. 2. The primary interface card 224 may not only be configured to perform communication between the primary storage device 220 and the remote storage device 230, but also be configured to back up target data. In synchronous remote replication, after separately writing the target data into the primary interface card 224 (also referred to as a cache of the primary interface card 224) and the primary cache 222, the primary management module 221 may return a write response to the host 210.

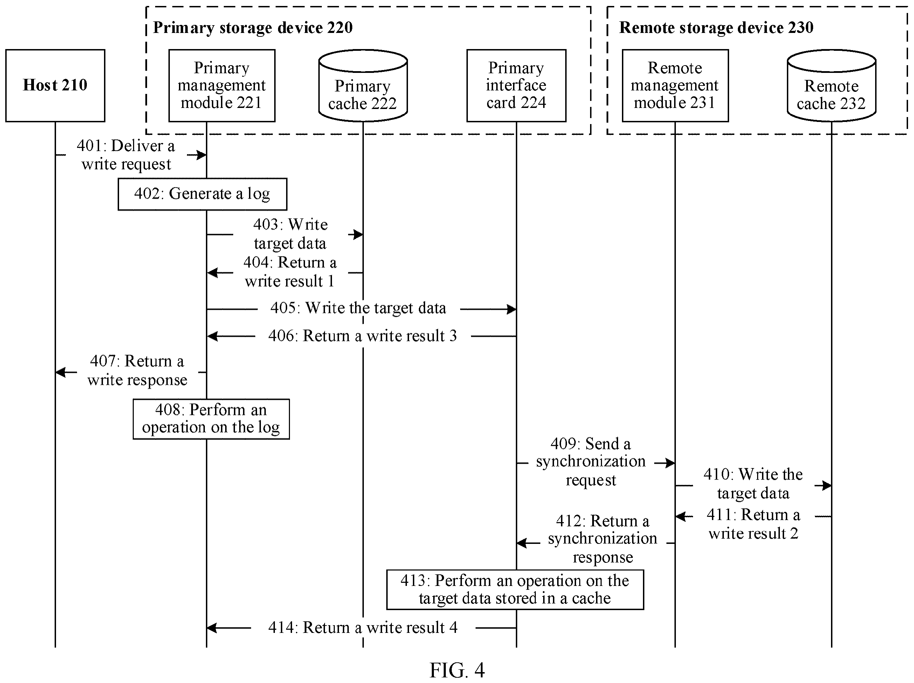

For a specific procedure, refer to a flowchart shown as an example in FIG. 4.

Step 401: The host 210 delivers a write request to the primary management module 221.

The write request is, for example, an input/output (input/output, I/O) write request.

The write request includes to-be-written target data and an identifier of a target primary disk specified by a customer. The identifier of the target primary disk is used by the primary management module 221 to select, from a plurality of primary disks included in the primary storage array 223, a target primary disk configured to store the target data. Optionally, the write request further includes a length (datalen) of the to-be-written target data.

Step 402: The primary management module 221 generates a log corresponding to the write request.

Specifically, the primary management module 221 obtains the length of the target data and the identifier of the target primary disk from the write request. The primary management module 221 determines the target primary disk from the primary storage array 223 based on the identifier of the target primary disk, and determines a storage offset (for example, a logical block address (logical block address, LBA)) based on the length of the target data that has been stored in the target primary disk. Then, the primary management module 221 generates a log corresponding to the write request based on the length of the target data, the identifier of the target primary disk, the storage offset, and a timestamp (timetrace) 1. The timestamp 1 may be time at which the primary management module 221 obtains the write request, or time at which the primary management module 221 generates the log.

For example, the length of the target data obtained by the primary management module 221 from the write request is 1 G, and the identifier of the target primary disk is ID1. The primary management module 221 determines the target primary disk from the primary storage array 223 based on the "the identifier of the disk ID1", and then determines that a length that has been currently stored in the target primary disk is 10 G, that is, determines that a storage offset is 10 G. A log, corresponding to the write request, generated by the primary management module 221 includes "ID1, 10 G, 1 G, and the timestamp 1".

Step 403: The primary management module 221 writes the target data into the primary cache 222.

Optionally, the primary management module 221 further writes the identifier of the target primary disk, the storage offset, and a timestamp 2 into the primary cache 222. The timestamp 2 may be the timestamp 1, or time at which the primary management module 221 writes the target data into the primary cache 222.

Step 404: The primary cache 222 returns a write result 1 to the primary management module 221.

Specifically, if the primary cache 222 determines that the target data is successfully cached, the write result 1 returned to the primary management module 221 is a write success, that is, the primary management module 221 successfully writes the target data into the primary cache 222. If the primary cache 222 determines that the target data fails to be cached, the write result 1 returned to the primary management module 221 is a write failure, that is, the primary management module 221 fails to write the target data into the primary cache 222. A reason why the primary management module 221 fails to write the target data into the primary cache 222 may be insufficient space of the cache of the primary cache 222. Further, a reason for the insufficient space of the cache in the primary cache 222 may be that the data in the primary cache 222 fails to be flushed to the disk due to a fault of a primary disk all the time. Therefore, the primary cache 222 caches a large amount of data that fails to be flushed to the disk.

Further, after successfully caching the target data, the primary cache 222 may write the target data into the primary storage array 223. Specifically, the primary cache 222 writes the target data into the target primary disk of the primary storage array 223 based on the identifier of the target primary disk and the storage offset (that is, flushes the target data into the disk for storage). Alternatively, after determining that the primary cache 222 successfully caches the target data, the primary management module 221 writes the target data in the primary cache 222 into the target primary disk of the primary storage array 223 based on the identifier of the target primary disk and the storage offset.

Step 405: The primary management module 221 writes the target data into a cache of the primary interface card 224.

**In** this application, the primary interface card 224 is not only configured to perform communication between the primary storage device 220 and the remote storage device 230, but also configured to store the target data. It may be understood that an existing module (that is, the primary interface card 224) in the primary storage device 220 is assigned with a new function, to shorten a synchronization delay in synchronous remote replication and reduce costs. Further, the primary interface card 224 has a power loss protection function. Even if the primary storage device 220 is faulty and cannot provide electric energy for the primary interface card 224, the primary interface card 224 can also ensure that the target data is not lost.

For example, the primary interface card 224 may be connected to the primary storage device 220 in a form of a plug-in card, to implement a connection between the primary interface card 224 and the primary management module 221. The primary interface card 224 may be a data processing unit (data processing unit, DPU).

For example, the primary management module 221 may write the identifier of the target primary disk, the storage offset, the length of the target data, the target data, and a timestamp 3 into the primary interface card 224. The timestamp 3 may be the timestamp 2, or time at which the primary management module 221 writes the target data into the cache of the primary interface card 224.

It should be supplemented that the primary disk in the primary storage array 223 and a remote disk in the remote storage array 233 may be in one-to-one mapping relationship. For example, the primary storage array 223 includes a primary disk 1 to a primary disk n, and the remote storage array 233 includes a remote disk 1 to a remote disk n that respectively correspond to the primary disk 1 to the primary disk n, where n is a positive integer. Optionally, n mapping relationships formed by the primary disk 1 to the primary disk n and the remote disk 1 to the remote disk n are preconfigured in the primary management module 221. Optionally, the n mapping relationships may be set by the customer in the host 210.

In a possible manner, after obtaining the identifier of the target primary disk from the write request, the primary management module 221 may further determine a remote disk (denoted as a target remote disk) corresponding to the target primary disk from the remote disk 1 to the remote disk n based on the identifier of the target primary disk and the n mapping relationships preconfigured in the primary management module 221. Further, the primary management module 221 further writes an identifier of the target remote disk into the cache of the primary interface card 224, or writes an identifier pair (pair) including the identifier of the target primary disk and the identifier of the target remote disk into the cache of the primary interface card 224.

In another possible implementation, after obtaining the identifier of the target primary disk from the write request, the primary management module 221 may further write the identifier of the target primary disk into the cache of the primary interface card 224, and the remote management module 231 determines the identifier of the target remote disk based on the identifier of the target primary disk and the n preset correspondences. For a specific implementation, refer to the descriptions in step 410.

Step 406: The primary interface card 224 returns a write result 3 to the primary management module 221.

Specifically, if the primary interface card 224 determines that the target data is successfully cached, the write result 3 returned to the primary management module 221 is a write success, that is, the primary management module 221 successfully writes the target data into the cache of the primary interface card 224. If the primary cache 222 determines that the target data fails to be cached, the write result 3 returned to the primary management module 221 is a write failure, that is, the primary management module 221 fails to write the target data into the cache of the primary interface card 224.

A reason why the primary management module 221 fails to write the target data into the cache of the primary interface card 224 may be one or both of insufficient space of the cache of the primary interface card 224 and insufficient concurrency of the cache of the primary interface card 224. The insufficient concurrency of the cache may be understood as that a total quantity of messages received by the cache exceeds a total quantity of messages that can be supported by the cache (that is, a sum of a quantity of messages being concurrently processed and a quantity of messages in a cache queue).

In this application, a sequence of step 403 and step 405 is not limited. The primary management module 221 may first write the target data into the primary cache 222, and then write the target data into the cache of the primary interface card 224. Alternatively, the primary management module 221 may first write the target data into the cache of the primary interface card 224, and then write the target data into the primary cache 222. Alternatively, the primary management module 221 may write the target data into the cache of the primary interface card 224 and the primary cache 222 simultaneously.

Step 407: The primary management module 221 returns a write response to the host 210 based on the write result 1 and the write result 3.

In a possible example, if the primary management module 221 determines that both the write result 1 and the write result 3 are a write success, the write response sent to the host 210 is a write success (that is, a write success response). If the primary management module 221 determines that the write result 1 and/or the write result 3 are/is a write failure, the write response sent to the host 210 is a write failure (that is, a write failure response).

In another possible example, if the primary management module 221 determines that both the write result 1 and the write result 3 are a write success, the write response sent to the host 210 is a write success (that is, a write success response). If the primary management module 221 determines that the write result 1 is a write success and the write result 3 is a write failure, the write response sent to the host 210 is a write success (that is, a write success response). Further, the primary management module 221 may obtain the target data from the primary cache 222, and write the target data into the cache of the primary interface card 224 again. Alternatively, the primary management module 221 obtains the target data from the target primary disk based on the log corresponding to the write request, and writes the target data into the cache of the primary interface card 224 again. If the primary management module 221 determines that the write result 1 is a write failure and the write result 3 is a write success, the write response sent to the host 210 is a write failure (that is, a write failure response).

Step 408: The primary management module 221 performs an operation on the log.

Specifically, if determining that both the write result 1 and the write result 3 are a write success, the primary management module 221 deletes the log; or if determining that the write result 1 and/or the write result 3 are/is a write failure, the primary management module 221 stores the log in a data change log (data change log, DCL). The DCL is used to implement incremental backup during a next time of synchronization.

In this application, a sequence of step 407 and step 408 is not limited. The primary management module 221 may first return the write response to the host 210, and then perform the operation on the log. Alternatively, the primary management module 221 first performs the operation on the log, and then returns the write response to the host 210. In addition, step 408 may alternatively be performed after the following step 414.

It may be understood that, after receiving the write result 1 and the write result 3, the primary management module 221 may return a write success to the host 210 without a need to determine whether the target data is written into the remote cache 232. This helps shorten the synchronization delay of the synchronous remote replication.

In addition, the primary management module 221 may further maintain health states of the n mapping relationships. The health state may be "normal" or "abnormal". "Normal" indicates that data between the primary disk and the remote disk in a corresponding mapping relationship can be synchronized, and "abnormal" indicates that data between the primary disk and the remote disk in a corresponding mapping relationship cannot be synchronized.

When the primary management module 221 determines that the target data is successfully written into the primary cache 222 (that is, the write result 1 is a write success) but the target data fails to be written into the cache of the primary interface card 224 (that is, the write result 3 is a write failure), the primary management module 221 may update a health state of a mapping relationship (denoted as a target mapping relationship) formed by the target primary disk and the target remote disk from "normal" to "abnormal", and record anomaly time at which the health state changes from "normal" to "abnormal". The write response sent by the primary management module 221 to the host 210 is a write success, and the log is stored in the DCL.

Further, the primary management module 221 may periodically attempt to write the target data into the cache of the primary interface card 224, and after determining that the target data is successfully written into the cache of the primary interface card 224, update the health state of the target mapping relationship from "abnormal" to "normal".

Alternatively, the primary management module 221 indicates, to the host 210, that the health state of the target mapping relationship is updated from "normal" to "abnormal". Correspondingly, the host 210 displays prompt information to the customer. The prompt information is that the health state of the target mapping relationship is updated from "normal" to "abnormal". The customer may check a storage link between the primary storage device 220 and the remote storage device 230, and determine and repair a faulty part in the current storage link. For example, if the customer determines that a reason why the primary management module 221 fails to write the target data into the cache of the primary interface card 224 is that the primary interface card 224 is faulty, the primary interface card 224 is repaired. Further, the customer may deliver an instruction to the host 210 to instruct to synchronize data between the primary storage device 220 and the remote storage device 230. Correspondingly, the host 210 sends a synchronization indication to the primary management module 221, and the primary management module 221 synchronizes the data between the primary storage device 220 and the remote storage device 230 based on the synchronization indication, that is, attempts to write the target data into the cache of the primary interface card 224 again. It may be understood that in this implementation, the storage link includes at least one or more of three parts: The primary management module 221 writes the target data into the primary interface card 224, the primary interface card 224 sends a synchronization request to the remote management module 231, and the remote management module 231 writes the target data into the remote cache 232. The customer may detect each part in the storage link to determine a part that is faulty.

When the primary management module 221 writes the target data into the cache of the primary interface card 224, specifically, the primary management module 221 obtains the anomaly time at which the health state changes from "normal" to "abnormal", obtains, from the DCL based on the anomaly time, a log corresponding to the timestamp 1 after the anomaly time, obtains the target data from the target primary disk based on the log, and then writes the target data into the cache of the primary interface card 224 again.

It may be understood that if the write response sent by the primary management module 221 to the host 210 is a write failure, the host 210 interrupts a currently running application service. However, when the primary management module 221 updates the health state of the target mapping relationship from "normal" to "abnormal", the currently running application service on the host 210 is not affected. In this way, when determining that the target data fails to be written into the cache of the primary interface card 224, the primary management module 221 may update the health state of the target mapping relationship, so that interruption of the currently running application service on the host 210 is avoided, and customer experience is improved.

Further, to ensure data synchronization between the primary storage device 220 and the remote storage device 230, that is, to ensure data reliability in a disaster recovery and backup scenario, the primary interface card 224 further needs to send the synchronization request to the remote management module 231, so that the remote management module 231 writes the target data in the synchronization request into the remote cache 232.

Step 409: The primary interface card 224 sends the synchronization request to the remote management module 231. The synchronization request includes the target data, and the synchronization request indicates the remote management module 231 to write the target data into the remote cache 232.

In a possible manner, the synchronization request sent by the primary interface card 224 to the remote management module 231 may further include the identifier of the target remote disk. Alternatively, the synchronization request sent by the primary interface card 224 to the remote management module 231 may further include the identifier pair including the identifier of the target primary disk and the identifier of the target remote disk. Alternatively, the synchronization request sent by the primary interface card 224 to the remote management module 231 may further include the identifier of the target primary disk.

In a possible manner, the primary interface card 224 specifically sends the synchronization request to the remote interface card 234, and the remote interface card 234 processes the synchronization request and then sends a processed synchronization request to the remote management module 231. It may also be understood that the remote management module 231 receives the synchronization request from the primary interface card 224 by using the remote interface card 234. For example, the synchronization request may further include a source IP, a source port, a destination IP, and a destination port. Specifically, the source IP and the source port are an IP and a port of the primary interface card 224, and the destination IP and the destination port are an IP and a port of the remote interface card 234.

Step 410: The remote management module 231 obtains the target data from the synchronization request, and writes the target data into the remote cache 232.

In a possible manner, the remote management module 231 further obtains the identifier of the target remote disk (or the identifier pair including the identifier of the target primary disk and the identifier of the target remote disk) from the synchronization request, and writes the identifier of the target remote disk (or the identifier pair including the identifier of the target primary disk and the identifier of the target remote disk) into the remote cache 232.

In another possible manner, the remote management module 231 may alternatively be preconfigured with the n mapping relationships. For example, the primary storage device 220 synchronizes the n mapping relationships to the remote storage device 230. For a specific synchronization manner, refer to the descriptions of synchronizing the target data from the primary storage device 220 to the remote storage device 230 in FIG. 4. For another example, the customer configures the n mapping relationships for the remote management module 231 via the host 240. Further, the remote management module 231 further obtains the identifier of the target primary disk from the synchronization request, and determines an identifier of a target remote disk corresponding to the target primary disk based on the identifier of the target primary disk and the n preconfigured mapping relationships. Further, the remote management module 231 writes the target data and the identifier of the target remote disk into the remote cache 232.

In addition, the remote management module 231 may further determine the target remote disk from the remote storage array 233 based on the identifier of the target remote disk, and determine a storage offset based on a length that has been stored in the target remote disk. The remote management module 231 writes the storage offset into the remote cache 232. After the remote management module 231 successfully writes the target data, the identifier of the target remote disk, and the storage offset into the remote cache 232, the remote cache 232 may write the target data into the target remote disk in the remote storage array 233 based on the identifier of the target remote disk and the storage offset (that is, flush the target data into the disk for storage). Alternatively, after determining that the target data is successfully cached in the remote cache 232, the remote management module 231 writes the target data in the remote cache 232 into the target primary disk based on the identifier of the target remote disk and the storage offset.

Step 411: The remote cache 232 returns a write result 2 to the remote management module 231.

Specifically, if the remote cache 232 determines that the target data is successfully cached, the write result 2 returned to the remote management module 231 is a write success, that is, the remote management module 231 successfully writes the target data into the remote cache 232. If the remote cache 232 determines that the target data fails to be cached, the write result 2 returned to the remote management module 231 is a write failure, that is, the remote management module 231 fails to write the target data into the remote cache 232.

A reason why the remote management module 231 fails to write the target data into the remote cache 232 may be insufficient cache space of the remote cache 232. Further, a reason for the insufficient cache space in the remote cache 232 may be that the data in the remote cache 232 fails to be flushed to the disk due to a fault of the remote disk all the time. Therefore, the remote cache 232 caches a large amount of data that fails to be flushed to the disk.

Step 412: The remote management module 231 returns a synchronization response to the primary interface card 224.

Specifically, when the write result 2 is a write success, the synchronization response is also a write success (also referred to as a synchronization success response). When the write result 2 is a write failure, the synchronization response is also a write failure (also referred to as a synchronization failure response). For example, the remote management module 231 sends the synchronization response to the primary interface card 224 by using the remote interface card 234. Correspondingly, the primary interface card 224 receives the synchronization response from the remote management module 231.

Optionally, the remote management module 231 further returns a receiving response to the primary interface card 224. The receiving response indicates that the remote management module 231 has received the synchronization request from the primary interface card 224. In this implementation, if not receiving the receiving response from the remote management module 231 within a preset time period for sending the synchronization request, the primary interface card 224 sends the synchronization request to the remote management module 231 again. Optionally, if determining that a quantity of times of sending the synchronization request to the remote management module 231 reaches a preset value, and still not receiving a receiving response to any one of the plurality of synchronization requests, the primary interface card 224 determines that a network between the primary storage device 220 and the remote storage device 230 is disconnected.

After determining that the network between the primary storage device 220 and the remote storage device 230 is disconnected, the primary interface card 224 sends a disconnection indication to the primary management module 221. In response to the disconnection indication, the primary management module 221 updates the health state of the target mapping relationship from "normal" to "abnormal", and records the anomaly time at which the health state changes from "normal" to "abnormal". For a specific implementation, refer to the descriptions in step 407.

It may be understood that a distance between the primary interface card 224 and the remote management module 231 is long, and transmission between the primary interface card 224 and the remote management module 231 needs to be performed through a network. A delay from time at which the primary interface card 224 sends the synchronization request to the remote management module 231 to time at which the primary interface card 224 receives the synchronization response from the remote management module 231 is long. However, because the host 210 does not need to wait for the synchronization response indicating that the primary storage device 220 successfully synchronizes the target data to the remote storage device 230, a delay caused by the distance between the primary interface card 224 and the remote management module 231 does not affect a synchronization delay of the host 210 in a synchronous remote replication procedure.

Step 413: The primary interface card 224 performs an operation on the target data stored in the cache of the primary interface card 224 based on the synchronization response.

Specifically, if determining, based on the synchronization response returned by the remote management module 231, that the target data is successfully written into the remote cache 232, the primary interface card 224 deletes the target data in the cache of the primary interface card 224. If determining that the target data fails to be written into the remote cache 232, the primary interface card 224 sends the synchronization request to the remote management module 231 again.

Step 414: The primary interface card 224 returns a write result 4 to the primary management module 221.

For example, after obtaining the write result 4 returned by the primary interface card 224, the primary management module 221 determines whether the write result 4 is a write success or a write failure. When determining that the write result 4 is a write failure, the primary management module 221 may update the health state of the target mapping relationship from "normal" to "abnormal", and record the anomaly time at which the health state changes from "normal" to "abnormal". For a specific implementation, refer to the descriptions in step 407.

In this application, a sequence of step 413 and step 414 is not limited. The primary interface card 224 may first return the write result 4 to the primary management module 221, and then performs the operation on the target data stored in the cache of the primary interface card 224. Alternatively, the primary management module 221 first performs the operation on the target data stored in the cache of the primary interface card 224, and then returns the write result 4 to the primary management module 221.

This helps ensure that the target data is successfully written into the remote cache 232, to implement consistency of data in the remote storage device 230 with that in the primary storage device 220. When the host 210 or the primary storage device 220 is faulty, the host 240 and the remote storage device 230 may be used to provide a service for the customer, that is, the host 240 and the remote storage device 230 are respectively used as a new host and a new primary storage device, to improve the data reliability in the disaster recovery and backup scenario.

To further improve the data reliability in the disaster recovery and backup scenario, not only the primary interface card 224 but also one or more backup interface cards 225 may be deployed in the primary storage device 220 in this application. The backup interface card 225 may be connected to the primary storage device 220 in a form of a plug-in card, and the backup interface card 225 may be a DPU.

In a possible manner, the primary management module 221 not only writes the target data into the cache of the primary interface card 224, but also writes the target data into a cache of the backup interface card 225. In another possible manner, after the primary management module 221 writes the target data into the cache of the primary interface card 224, the primary interface card 224 may not only send the target data to the remote management module 231 by using the synchronization request, but also mirror and back up the target data to the cache of the backup interface card 225. In this way, after the primary interface card 224 is faulty, the backup interface card 225 may send the synchronization request to the remote management module 231, so that the target data is cached in the remote cache 232.

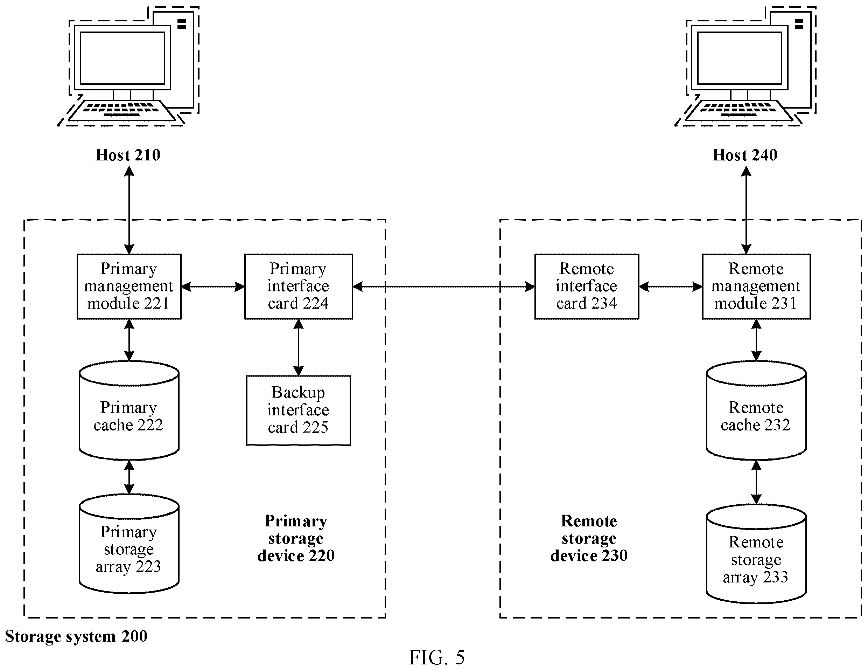

FIG. 5 is a diagram of an architecture of another storage system applicable to a remote replication scenario according to an example of this application. A primary storage device 220 includes one primary interface card 224 and one backup interface card 225. The primary interface card 224 is connected to the backup interface card 225. A primary management module 221 may mirror and back up target data to a cache of the backup interface card 225.

In a possible implementation, the primary management module 221 may monitor running statuses of the primary interface card 224 and the backup interface card 225. If it is determined that the primary interface card 224 is faulty, the backup interface card 225 in a normal running status may be indicated to send a synchronization request to a remote management module 231.

In a possible implementation, after determining, based on a synchronization response from the remote management module 231, that the target data has been successfully written into a remote cache 232, the primary interface card 224 may not only delete target data in a cache of the primary interface card 224, but also delete the target data in the cache of the backup interface card 225, to ensure that the primary interface card 224 and the backup interface card 225 can have sufficient storage space to store new target data.

Based on the foregoing solutions, this application provides examples of synchronous remote replication methods in three fault scenarios.

### Fault scenario 1

When a network between a primary storage device 220 and a remote storage device 230 is disconnected (that is, a primary interface card 224 in the primary storage device 220 cannot send a synchronization request to a remote management module 231 in the remote storage device 230), a worker may synchronize target data in the primary storage device 220 to the remote storage device 230 via a third device. Optionally, the third device is a card reader, the third device may be located in a data center other than a primary data center and a remote data center, and the third device may be separately connected to the primary storage device 220 and the remote storage device 230.

Optionally, in a time period in which the network between the primary storage device 220 and the remote storage device 230 is disconnected, a primary management module 221 may obtain one or more pieces of target data from a host 210, and write the one or more pieces of target data into a primary cache 222. Correspondingly, the primary management module 221 may generate, based on the one or more pieces of target data, a log corresponding to each piece of target data, and store the logs corresponding to the pieces of target data in a DCL.

In a specific implementation, the third device sends a log request to the primary management module 221. The log request is used to request, from the primary management module 221, a log that is in the DCL, that corresponds to a timestamp 1, and that is after start time at which the network is disconnected. Correspondingly, the primary management module 221 selects, from the DCL based on the start time at which the network is disconnected, one or more logs that correspond to the timestamp 1 and that are after the start time, and returns the one or more logs to the third device. Optionally, the primary management module 221 may monitor a status of the network between the primary storage device 220 and the remote storage device 230, and when determining that the network between the primary storage device 220 and the remote storage device 230 is disconnected, record the start time at which the network is disconnected.

Optionally, for each log, the third device determines a target primary disk based on an identifier that is of the target primary disk and that is recorded in the log, and obtains the target data from the target primary disk based on a storage offset and a length of the target data that are recorded in the log, so that the third device may obtain target data indicated by the one or more logs. The third device sends the synchronization request to the remote management module 231. The synchronization request includes the target data respectively indicated by the one or more logs. Correspondingly, the remote management module 231 obtains the target data respectively indicated by the one or more logs from the synchronization request, and writes the obtained target data into a remote cache 232.

### Fault scenario 2

When a network between a primary storage device 220 and a remote storage device 230 is disconnected (that is, a primary interface card 224 in the primary storage device 220 cannot send a synchronization request to a remote management module 231 in the remote storage device 230), a worker may manually remove the primary interface card 224 from the primary storage device 220, and then insert the primary interface card 224 into the remote storage device 230. Correspondingly, when detecting that an interface card (that is, the primary interface card 224) is inserted, the remote management module 231 in the remote storage device 230 reads target data recorded in the detected primary interface card 224, and then writes the target data into a remote cache 232.

Optionally, in a time period in which the network between the primary storage device 220 and the remote storage device 230 is disconnected, a primary management module 221 may obtain one or more pieces of target data from a host 210, and write the one or more pieces of target data into the primary interface card 224. Correspondingly, when the remote management module 231 in the remote storage device 230 detects that an interface card is inserted, the remote management module 231 may read the one or more pieces of target data in the primary interface card 224, and write the one or more pieces of target data into the remote cache 232 in sequence.

Optionally, the remote management module 231 in the remote storage device 230 may monitor a status of the network between the primary storage device 220 and the remote storage device 230, and when determining that the network between the primary storage device 220 and the remote storage device 230 is disconnected, record start time at which the network is disconnected. Then, when the remote management module 231 reads the one or more pieces of target data from the primary interface card 224, specifically, the remote management module 231 may select, from the primary interface card 224 based on the start time at which the network is disconnected, one or more pieces of target data for timestamp 3 that are after the start time, and write the target data into the remote cache 232.

### Fault scenario 3

When a network between a primary storage device 220 and a remote storage device 230 is disconnected (that is, a primary interface card 224 in the primary storage device 220 cannot send a synchronization request to a remote management module 231 in the remote storage device 230), a worker may synchronize target data in the primary storage device 220 to the remote storage device 230 via a third device. For a definition of the third device, refer to the descriptions in the fault scenario 1.

Optionally, in a time period in which the network between the primary storage device 220 and the remote storage device 230 is disconnected, a primary management module 221 may obtain one or more pieces of target data from a host 210, and write the one or more pieces of target data into the primary interface card 224. In a specific implementation, the primary management module 221 may monitor a status of the network between the primary storage device 220 and the remote storage device 230, and when determining that the network between the primary storage device 220 and the remote storage device 230 is disconnected, record start time at which the network is disconnected. The third device requests, from the primary management module 221, the start time at which the network is disconnected, reads, based on the start time at which the network is disconnected, the one or more pieces of target data for timestamp 3 that are after the start time in the primary interface card 224, and then sends the one or more pieces of target data to the remote management module 231 by using the synchronization request. Correspondingly, the remote management module 231 obtains, from the synchronization request, target data respectively indicated by one or more logs, and writes the obtained target data into the remote cache 232.

It should be supplemented that when the primary storage device 220 further includes a backup interface card 225, that the network between the primary storage device 220 and the remote storage device 230 is disconnected may specifically mean that neither the primary interface card 224 nor the backup interface card 225 in the primary storage device 220 can send the synchronization request to the remote management module 231 in the remote storage device 230. Further, in the foregoing fault scenario 2 and fault scenario 3, data may be synchronized by using the backup interface card 225.

Based on the foregoing content and a same concept, this application provides a possible synchronous remote replication apparatus for a storage system. The synchronous remote replication apparatus may be configured to implement functions of the primary storage device 220 in the foregoing method embodiments, and therefore, can also achieve beneficial effects of the foregoing method embodiments. The synchronous remote replication apparatus may be the primary storage device 220 in the foregoing method embodiments. In a case in which the synchronous remote replication apparatus is the primary storage device 220 in the foregoing method embodiments:

In a possible implementation, the synchronous remote replication apparatus includes a primary management module 221, a primary cache 222, and a primary interface card 224. The primary management module 221 is configured to: obtain a write request from a host, where the write request includes target data; write the target data into the primary interface card 224; write the target data into the primary cache 222; and send a write success response to the host in response to writing the target data into the primary cache 222. The primary interface card 224 is configured to send the target data to a remote storage device 230.

In a possible implementation, the apparatus further includes a backup interface card 225, and the primary interface card 224 is further configured to write the target data into the backup interface card 225.

In a possible implementation, the apparatus further includes a primary storage array 223, and the write request further includes an identifier of a target primary disk. After writing the target data into the cache 222, the primary management module 221 is further configured to: determine the target primary disk from the primary storage array 223 based on the identifier of the target primary disk, and store the target data in the primary cache 222 in the target primary disk.

In a possible implementation, the primary management module 221 is further configured to: determine an identifier of a target remote disk based on the identifier of the target primary disk and a preset mapping relationship between the target primary disk and the target remote disk, where the target remote disk is a disk in a remote storage array included in the remote storage device 230; and write the identifier of the target remote disk into the primary interface card 224. The primary interface card 224 is further configured to send the identifier of the target remote disk to the remote storage device 230.

In a possible implementation, the primary management module 221 is further configured to: update a health state of the mapping relationship that is between the target primary disk and the target remote disk and that is recorded in the primary management module 221 to abnormal in response to a failure of writing the target data into the primary interface card 224.

In a possible implementation, the primary management module 221 is further configured to: when detecting that a network between the apparatus and the remote storage device 230 is disconnected, record start time at which the network is disconnected; and obtain a log request, and in response to the log request, output a log after the start time. The log after the start time is used to query data from the primary storage array 223 of the apparatus.

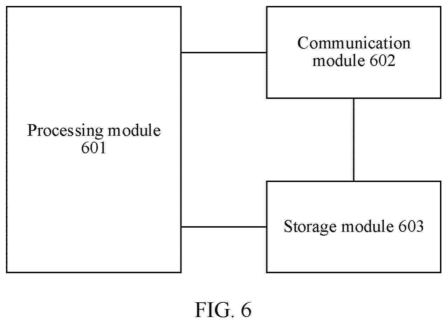

Based on the foregoing content and a same concept, FIG. 6 shows another possible synchronous remote replication apparatus 600 according to this application. The synchronous remote replication apparatus 600 may be configured to implement functions of the primary storage device 220 in the foregoing method embodiments, and therefore, can also achieve beneficial effects of the foregoing method embodiments. The synchronous remote replication apparatus 600 may be the primary storage device 220 in the foregoing method embodiments.

In a possible implementation, the synchronous remote replication apparatus 600 includes a processing module 601, a communication module 602, and a storage module 603. The processing module 601 is configured to perform operations performed by the primary management module 221 in the foregoing embodiments. The communication module 602 is configured to perform operations performed by the primary interface card 224 (the primary interface card 224 and the backup interface card 225) in the foregoing embodiments. The storage module 603 is configured to perform operations performed by the primary cache 222 and the primary storage array 223 in the foregoing embodiments.

Division into modules in embodiments of this application is an example, is merely logical function division, and may be other division in an actual implementation. In addition, functional modules in embodiments of this application may be integrated into one processor, or each of the functional modules may exist alone physically, or two or more modules may be integrated into one module. The integrated module may be implemented in a form of hardware, or may be implemented in a form of a software functional module.

Based on the foregoing content and a same concept, this application provides a computer-readable storage medium. The computer-readable storage medium stores a computer program or instructions. When the computer program or the instructions are executed by a computing device, the computing device performs actions performed by the primary storage device 220 in the foregoing method embodiments.

Based on the foregoing content and a same concept, this application provides a computing device, including a processor. The processor is connected to a memory. The memory is configured to store a computer program. The processor is configured to execute the computer program stored in the memory, to perform actions performed by the primary storage device 220 in the foregoing method embodiments.

Based on the foregoing content and a same concept, an embodiment of this application provides a computer program product. When a computer reads and executes the computer program product, the computer is enabled to perform actions performed by the primary storage device 220 in the foregoing method embodiments.

Based on the foregoing content and a same concept, this application provides a synchronous remote replication system, including the primary storage device 220 and the remote storage device 230 in the foregoing method embodiments. Optionally, the synchronous remote replication system further includes the host 210 and the host 240 in the foregoing method embodiments.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of protection of this application. In this way, this application is also intended to cover these modifications and variations of this application provided that such modifications and variations fall within the scope of the claims of this application and equivalent technologies thereof.

## Claims

1. A synchronous remote replication method for a storage system, wherein the storage system comprises a primary storage device and a remote storage device, and the primary storage device comprises a cache and a primary interface card; and
the method comprises:
obtaining, by the primary storage device, a write request from a host, wherein the write request comprises target data;
writing, by the primary storage device, the target data into the primary interface card;
writing, by the primary storage device, the target data into the cache;
sending, by the primary storage device, a write success response to the host in response to writing the target data into the cache; and
sending, by the primary storage device, the target data to the remote storage device.

2. The method according to claim 1, wherein the primary storage device further comprises a backup interface card; and
after writing, by the primary storage device, the target data into the primary interface card, the method further comprises:
writing, by the primary storage device, the target data into the backup interface card.

3. The method according to claim 1 or 2, wherein the primary storage device further comprises a primary storage array, and the write request further comprises an identifier of a target primary disk; and
after writing, by the primary storage device, the target data into the cache, the method further comprises:
determining, by the primary storage device, the target primary disk from the primary storage array based on the identifier of the target primary disk, and storing the target data in the cache in the target primary disk.

4. The method according to any one of claims 1 to 3, further comprising:
determining, by the primary storage device, an identifier of a target remote disk based on the identifier of the target primary disk and a preset mapping relationship between the target primary disk and the target remote disk, wherein the target remote disk is a disk in a remote storage array comprised in the remote storage device;
writing, by the primary storage device, the identifier of the target remote disk into the primary interface card; and
sending, by the primary storage device, the identifier of the target remote disk to the remote storage device.

5. The method according to any one of claims 1 to 4, further comprising:
updating, by the primary storage device, a health state of the mapping relationship that is between the target primary disk and the target remote disk and that is recorded in the primary storage device to abnormal in response to a failure of writing the target data into the primary interface card.

6. The method according to any one of claims 1 to 5, further comprising:
when detecting that a network between the primary storage device and the remote storage device is disconnected, recording, by the primary storage device, start time at which the network is disconnected; and
obtaining, by the primary storage device, a log request, and in response to the log request, outputting a log after the start time, wherein the log after the start time is used to query data from the primary storage array of the primary storage device.

7. A synchronous remote replication apparatus for a storage system, comprising:
a primary management module, a cache, and a primary interface card, wherein
the primary management module is configured to: obtain a write request from a host, wherein the write request comprises target data; write the target data into the primary interface card; write the target data into the cache; and send a write success response to the host in response to writing the target data into the cache; and
the primary interface card is configured to send the target data to a remote storage device.

8. The apparatus according to claim 7, wherein the apparatus further comprises a backup interface card; and
the primary interface card is further configured to write the target data into the backup interface card.

9. The apparatus according to claim 7 or 8, wherein the apparatus further comprises a primary storage array, and the write request further comprises an identifier of a target primary disk; and
after writing the target data into the cache, the primary management module is further configured to:
determine the target primary disk from the primary storage array based on the identifier of the target primary disk, and store the target data in the cache in the target primary disk.

10. The apparatus according to any one of claims 7 to 9, wherein
the primary management module is further configured to:
determine an identifier of a target remote disk based on the identifier of the target primary disk and a preset mapping relationship between the target primary disk and the target remote disk, wherein the target remote disk is a disk in a remote storage array comprised in the remote storage device; and write the identifier of the target remote disk into the primary interface card; and
the primary interface card is further configured to:
send the identifier of the target remote disk to the remote storage device.

11. The apparatus according to any one of claims 7 to 10, wherein the primary management module is further configured to:
update a health state of the mapping relationship that is between the target primary disk and the target remote disk and that is recorded in the primary management module to abnormal in response to a failure of writing the target data into the primary interface card.

12. The apparatus according to any one of claims 7 to 11, wherein the primary management module is further configured to:
when detecting that a network between the apparatus and the remote storage device is disconnected, record start time at which the network is disconnected; and
obtain a log request, and in response to the log request, output a log after the start time, wherein the log after the start time is used to query data from the primary storage array of the apparatus.

13. A computer-readable storage medium, wherein the computer-readable storage medium stores a computer program or instructions, and when the computer program or the instructions are executed by a computing device, the computing device implements the method according to any one of claims 1 to 6.

14. A computing device, comprising a processor, wherein the processor is connected to a memory, the memory is configured to store a computer program, and the processor is configured to execute the computer program stored in the memory, to enable the computing device to perform the method according to any one of claims 1 to 6.

15. A storage system, comprising a primary storage device and a remote storage device, wherein the primary storage device is configured to perform the method according to any one of claims 1 to 6.
